# EUROPEAN PATENT SPECIFICATION

(11) **EP 3 820 301 B1**
(45) Date of publication and mention of the grant of the patent: **07.09.2022**
(21) Application number: 19743010.1
(22) Date of filing: 20.05.2019
(51) Int. Cl.: A23K 10/18, A23K 20/10, A23K 20/28, A23K 50/10

(54) **FEED SUPPLEMENT FOR ANIMALS AND MAN**
NAHRUNGSZUSATZ FÜR TIERE UND MENSCHEN
COMPLÉMENT ALIMENTAIRE POUR LES ANIMAUX ET L'HOMME

(30) Priority: 12.07.2018 NL 2021290
(43) Date of publication of application: 19.05.2021
(73) Proprietor: Koch, Carl Frederik Maurits, 7418 ET Deventer (NL)
(72) Inventor: Koch, Carl Frederik Maurits, 7418 ET Deventer (NL)
(74) Representative: Van Breda, Jacobus
(86) International application number: PCT/NL2019/050292
(87) International publication number: WO 2020/013685

(56) References cited:
- EP-A1- 1 358 805
- WO-A1-2017/075289
- FR-A1- 2 213 740
- US-A1- 2011 033 576
- US-A1- 2013 022 706

## Description

### FIELD OF THE INVENTION

The invention is in the field of a feed or food supplement for animals and man, a feed supplement for use as a medicament, for improving digestion of dairy animals, such as cows, for improving milk production, for improving health, especially in the gastrointestinal tract, for reducing illness, for improving skin quality, a feed comprising the feed supplement, and a method of forming said feed supplement.

### BACKGROUND OF THE INVENTION

The invention is in the field of a feed supplement for animals. Animal feed is food given to domestic animals. There are two basic types: fodder and forage. Fodder relates to foods or forages provided to animals, which may include plants cut. It includes hay, straw, silage, compressed and pelleted feeds, oils and mixed rations, and sprouted grains and legumes. Feed grains, such as maize, soybean, wheat, sorghum, oats, barley, and rice, are the most important source of animal feed globally. Other sources are byproducts of food processing industry. Typically a mixture is provided, such as compound feed, which may be adapted in view of the target animal. In addition premixes may be included or added, comprising microingredients such as vitamins, minerals, chemical preservatives, antibiotics, fermentation products, and other essential ingredients. The amount of grain and feed used to produce the same unit of meat varies substantially from type of animal, from 8kg/kg (cow) to 1.6 kg/kg (chicken).

Nutritional needs of animals are considered well understood and could be satisfied through natural forage and fodder alone, or augmented by direct supplementation of nutrients in concentrated, controlled form. The nutritional quality of feed is influenced not only by the nutrient content, but also by many other factors such as feed presentation, hygiene, digestibility, and effect on intestinal health. A feed additive may provide a mechanism through which these nutrient deficiencies can be resolved. It may effect the rate of growth of such animals and also their health and well-being. However, despite all knowledge available may animals have a sub-optimal digestion, milk production is typically high but also not optimal, they suffer from illnesses and therefore typically large amounts of medication, such as antibiotics are used, involving expensive medical care as well, and skin quality is typically not optimal as well. Apparently the prior art feed is optimized in only one or a few aspects, such as meat or milk production.

Specific feed supplements based on carbonaceous mine-stone are known in WO 96/33960 and provide reasonable results.

WO 2017/075289 A1 recites an animal nutrition composition including a carrier and a microbial fermentation product applied to the carrier. Further organic chemical compounds may be present. The dry carrier may be a phyllosilicate. US 2013/022706 A1 recites a feed additive compositions for supplementing the diet of an animal that can reduce the odor of manure produced by animals consuming the composition. The additive comprises a plant extract, such as of yucca and agave, a mineral clay, and Co or Fe. The additive is made by mixing ingredients.

The present invention therefore relates to an improved feed supplement, which overcome one or more of the above disadvantages, without jeopardizing functionality and advantages.

### SUMMARY OF THE INVENTION

The present invention relates in a first aspect to a feed supplement. The feed supplement comprises colloidal particles, that is finely divided feed supplement. The particles comprise 40-85 wt. % alumino-silicate mineral selected from at least one of a tetrahedral-octahedral (TO or 1:1) clay, and a tetrahedral-octahedral-tetrahedral (TOT or 2:1) clay, preferably 50-70 wt.%, 1-30 wt. % organic material, preferably fossil organic material, and more preferably integrated fossil organic material, and a remainder comprises water, such as crystal water, wherein wt.% are relative to a final weight of the supplement. The main fraction therefore relates to clay, a fraction to organic material, and further water. If a natural clay is used also other compounds, typically quartz-like comprising compounds, may be present.

In an example, in a mine of kaolinite clay, after micronizing or not, the presence of the proportion of colloidal clay is analyzed. This is done by a separation and grain size analysis in which the amount of kaolinite with a size below 0.2 micron and 0.45 micron is determined, respectively. The proportion of colloidal kaolinite may be increased by flotation, such as in water and/or air, whether or not combined with filtration. Depending on the strength and purpose of the kaolinite, the fraction may be maintained colloidally between 4-48%, typically between 10-20%. The content of integrated carbon compounds is between 1 and 55%, preferably between 8 and 12%.

Due to this size reduction the number of beneficial bacteria in silage or gut is found to increase, as well as the diversity of the bacteria. These natural microbial substances may be harvested by fermented feed, or extract material from the digestive tract, with solvents such as methanol, pentane, dmso, hexane and related polar and apolar solvents.

It has been found that the presence of a colloidal fraction of a natural humic acid/carbon-containing clay, such as kaolinite, offers advantages. The animal health improved, for instance noticeable in an improved color, white cow spots becoming whiter, and black spots becoming blacker, and in claw health. Also with it was established that at 15 comparable dairy farms, on average, with 6.5% less protein, the same production could be achieved by using the present feed supplement. Protein is an expensive constituent in feed. As a result, savings can be made on purchased feed. In addition it was established, by means of a manure sieving test, that if 5-8% more very rough feed, such as (protein-poor) rapeseed straw, were dosed in the ration, the digestion in the manure leaving the animal was reduced for undigested parts> 2 mm by 5-25%.

In an alternative to feed saving, more milk production was achieved, especially in new milk cows, production increased with 5-10% more milk within a few weeks to months, while the protein content remained at least the same, despite the fact that less protein is being given. As a result, also fewer minerals are lost in manure.

Compared to kaolinite in general, the stimulation of the rumen proceeds considerably better, possibly due to scavenging of antimicrobial compounds originating from feeds by the present supplement. In-vitro experiments, adding 1.5% ordinary kaolinite per ml of culture media, showed that the growth of geobacillus stearothermophilus was completely suppressed, which is unfavorable, and when adding the same amount of colloidal kaolinite with a proportion of about 15% colloidal kaolinite the growth was normal. In addition, in the area where bacteria released harmful substances in the digestion process, such as phenolic compounds, 5 x more bacteria were found, the inhibition zone was restricted by at least 80% by the colloidal kaolinite. It may be concluded that ordinary kaolinite, and likewise other clays as montmorillonite, have different chemical and biological effects than the present feed supplement. It is considered that the organic material, especially the integrated fossil organic material, and colloidal amount of the particles has changed said properties.

The quantity of clay to be used in the present feed supplement mat partly depend on the actual composition of a clay, as in each clay source, the percentage of colloidal parts, and e.g. the amount of kaolinite can vary in relation to other naturally present or mixed clays. Furthermore, it may vary in view of the type of animal. The dosage can be between 0.2% and 5% of the entire ration. In an example about 15% colloidal particles and 67% kaolinite is used. For cattle, horses and donkeys between 0.3% and 2.2% of the total feed (on a dry matter basis) may be used. For sheep, goats and pigs, mustelids and fish 0.2% - 1% may be used.

A dosage may vary depending on the clay minerals used, the proportion of colloidal kaolinite, the quality of the organic material having hydrocarbons integrated naturally or synthetically, the total particle size distribution and, above all, the abnormalities of animals, as determined by veterinarian and/or laboratory tests, such that the dose may be adjusted for the best result. The ration composition, quality and hygiene, may also influence the chosen composition and dosage. The dosage can be provided in a pure form, but can also be mixed or combined with roughage and other feeds. It can also be mixed in concentrates and special feeds, as well as mixtures that aim for better animal health. The feed supplement itself can be enriched with microorganisms which have a useful effect on the digestion of animals, such as yeasts, dead yeast cells, lactic acid bacteria etc. The feed supplement can also be mixed with zeolite and other clay minerals for specific purposes, for example special feed that can bind more of specific mycotoxins. Furthermore, it is possible to add carbon-containing compounds whether or not activated for binding of specific compounds. This may be pure carbon in the form of graphite, but also other forms which have a humic character, contain humin like, humic or fulvic acids. This may include soluble carbon compounds and insoluble carbon. It is noted that previously, carbonaceous kaolinite from e.g. clay layers in coal were used in animal feed, but these contained virtually no colloidal particles.

In a second aspect the present invention relates to a feed supplement as claimed for use as a medicament. It has been found that the present feed supplement provides many beneficial, medical, effects, as well as improvement of production.

The present feed supplement may be provided in a feed.

The present invention also relates to a method forming the present feed supplement, comprising a step of micronizing >50% particles to a size of < 45 µm, preferably >90%, such as > 95%, and/or sieving particles over a 1 µm sieve, and removing larger particles, preferably over a 0.5 µm sieve, more preferably a 0.45 µm sieve, and/or separation by means flotatation in water and/or air.

Thereby the present invention provides a solution to one or more of the above-mentioned problems.

Advantages of the present invention are detailed throughout the description.

### DETAILED DESCRIPTION OF THE INVENTION

The present invention relates in a first aspect to a feed supplement according to claim 1.

In an exemplary embodiment of the present feed supplement the Tetrahedral-Ocathedral-clay may be selected from kaolin clays, and the tetrahedral-octahedral-tetrahedral may be selected from the smectite group, the illite group, sepiolite, attapulgite. It has been found that various clays may be used.

In an exemplary embodiment of the present feed supplement the alumino-silicate clay may comprise 50-99.9 wt.% (relative to the total fraction of clay) kaolinite (Al₂Si₂O₅(OH)₄) and/or metakaolinite (Al₂Si₂O₇), preferably 60-99 wt.% and more preferably 75-98 wt.% kaolinite and/or metakaolinite. It has been found that especially kaolinite clays perform very well. A large fraction of these clays is therefore preferred.

In an exemplary embodiment the present feed supplement may comprise 2-20 wt. % organic material, preferably 5-15 wt.%, such as 8-12 wt.%. The organic material is found to contribute to the advantageous effects as well.

In an exemplary embodiment of the present feed supplement the organic material may comprise plant decay products, such as humic acids, fulvic acids, and humin, preferably fossil decay products. Preferably the clay is a natural clay and the organic material is fossil.

In an exemplary embodiment the present feed supplement may comprise 2-50% particles, with a size of < 1 µm, preferably < 0.5 µm. Thereto the clay may be further treated, such as micronizing. It has been found that a finer divided feed supplement offers better results.

In an exemplary embodiment the present feed supplement may comprise 5-40% particles, preferably 10-20%, with a size of < 0.5 µm, preferably < 0.25 µm; a large fraction of particles is preferably rather small.

In an exemplary embodiment of the present feed supplement the particles may have a BET surface of >200 m²/g (ISO 9277) .

In an exemplary embodiment of the present feed supplement the alumino-silicate mineral has a cationic exchange capacity of 5-100 meq/100 grams clay at a pH of 7, more preferably 10-60 meq/100 grams, even more preferably 12-40 meq/100 grams, such as 15-25 meq/100 grams. This is a relatively small CEC, but this low CEC prevents losses by fixation of vitamins and trace elements in the good results are obtained thereby.

In an exemplary embodiment the present feed supplement may comprise at least one of 0.1-3 wt.% microorganisms, 0.2-3 wt.% zeolite, such as Analcime (NaAl(Si₂O₆) ·(H₂O)), Clinoptilolite (Na,K,Ca)₂-₃Al₃(Al,Si)₂Si₁₃O₃₆·12(H₂O)), Laumontite (CaAl₂Si₄O₁₂·4(H₂O), Chabazite ((Ca_{0,5},Na,K)₄[Al₄Si₈O₂₄] ·12H₂O, Gismondine (Ca₂Al₄Si₄O₁₆ ·9(H₂O), Mazzite (K₂CaMg₂(Al,Si)₃₆O₇₂·28(H₂O), Heulandite ((Ba,Sr,K,Ca,Na)₂₋₃Al₃(Al,Si)₂Si₁₃O₃₆·12(H₂O), Stilbite (NaCa₄Al₈Si₂₈O₇₂·30(H₂O), Natrolite (Na₂Al₂Si₃O₁₀·2(H₂O), Mordenite ((Ca,Na₂,K₂)Al₂Si₁₀O₂₄·7(H₂O), Gottardiite (Na₃Mg₃Ca₅Al₁₉Si₁₁₇O₂₇₂·93(H_{2O}), Brewsterite ((Sr,Ba)Al₄Si₁₂O₃₂·10(H₂O), 0.1-3 wt.% TOT clay, such as illite, smectite, montmorillonite, sauconite, nontronite, saponite, vermiculite, bentonite, nacrite, biotite, lepidolite, muscovite, phlogopite, zinnwaldite, clintonite, 0.1-3 wt.% aluminosilicates, such as pyrophyllite, 0.1-3 wt.% talc, 0.1-3 wt.% allophane, 0.1-3 wt.% mica, such as biotite, muscovite, phlogopite, lepidolite, and margarite, 0.01-2 wt.% Ca-salt, 0.01-2 wt.% Mg-salt, 0.01-10 wt.% lignite, preferably 0.1-5 wt.% lignite, 0.01-3 wt.% fossil coal, preferably 0.1-1 wt.%, 0.1-3 wt.% activated coal, and Silicon oxide, such as quartz. These additives further support the beneficial effects of the present invention.

In an exemplary embodiment of the present feed or food supplement microorganisms may be selected from Bacillus cereus, Bacillus subtilis, Lactobacilus acidophilus, Bifidobacterium bifidum, Enterococcus faecium, Ruminobacter amylophilum, Ruminobacter succinogenes, Megasphera elsdeneii, Propionibacterium, geobacillus species, such as G. *stearothermophilus,* yeast, Lactobacillales, and combinations thereof.

In an exemplary embodiment of the present feed supplement the clay may be a natural clay, and/or may be selected from kaolinite, meta-kaolinite, Dickite (Al₂Si₂O₅(OH)₄, Nacrite (Al₂Si₂O₅(OH)₄), Halloysite (Al₂Si₂O₅(OH)₄), Odinite (Fe³⁺,Mg,Al,Fe²⁺,Ti,Mn)_{2,5}(Si,Al)₂O₅(OH)₄), and combinations thereof. Especially the kaolinite clays offer good results.

In an exemplary embodiment of the present feed supplement the clay, organic material, water, and optional further components in the particles form one fraction and are intimately mixed.

In an exemplary embodiment the present feed supplement may comprise >50% particles with a size of < 45 µm, preferably >90%, such as > 95%. Such is achieved by further processing of the particles obtained.

In an exemplary embodiment the present feed supplement is for use as a medicament.

In an exemplary embodiment of the present feed supplement the medicament may be for improving digestion of dairy animals, such as cows, for improving milk production, for improving health, especially in the gastrointestinal tract, for reducing irritation, for reducing inflammation, for reducing illness, for improving skin quality, such as for red and black pied coloured animals. Good results in all these aspects are obtained. For instance the feed supplement may be used to reduce inflammation, irritation, or other illnesses in the intestines; a dosage can be taken for seven days and then recuperation is typically achieved.

In a further aspect the present invention relates to a feed, comprising 0.1-10 wt.% feed supplement according to the invention, preferably 0.2-5 wt.%, such as 1-3 wt.%.

In an exemplary embodiment the present feed may be for bovines, Equidae, such as *Equus,* and E. africanus, donkeys, comprising 0.3-2.2 wt.% feed supplement, for sheep, goats, pigs, fish, and mustalidae, such as Mustelinae, such as Martes, comprising 0.1-1 wt.% feed supplement, such as 0.2-0.75 wt.%, wherein the wt.% is determined on a dry weight of the feed.

In an exemplary embodiment the feed may be selected from mixed feed, feed concentrate, crude fibre, provender, a feed ration, a dosage, and combinations thereof.

The invention is further detailed by the accompanying figure and example, which are exemplary and explanatory of nature and are not limiting the scope of the invention. To the person skilled in the art it may be clear that many variants, being obvious or not, may be conceivable falling within the scope of protection, defined by the present claims.

### SUMMARAY OF THE FIGURES

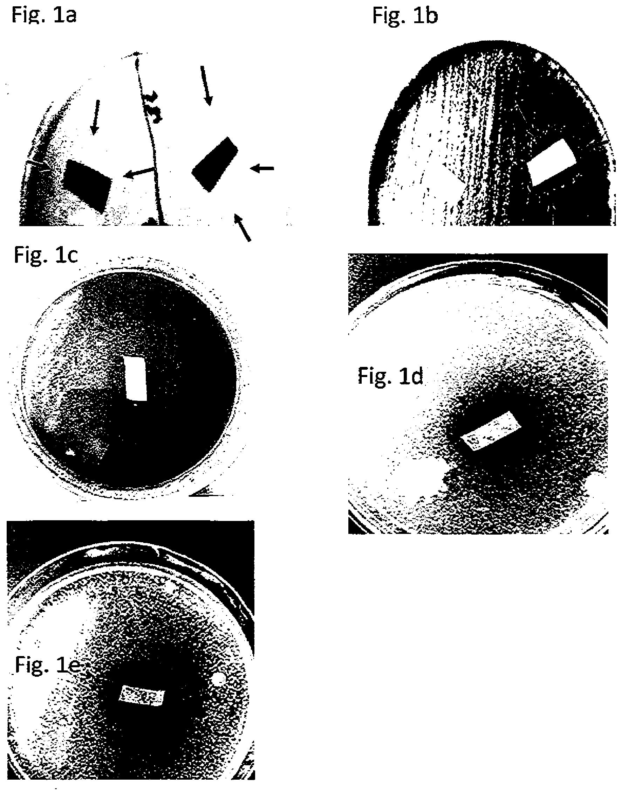

Figure 1a-e. Comparative Examples.

### DETAILED DESCRIPTION OF THE FIGURES

In a further aspect the present disclosure relates to the following microbiological preselection technique.

Figure 1 shows a experiments with bacteria on nutrient-agar plates. By extraction of fermented feed mixtures, using a polar solvent, such as 99.9% methanol Boom UHPLC-MS quality , an antimicrobial mixture has been obtained with 20-60 mg/l of antimicrobial compounds like 4-ethyl-phenol, 2 methoxy-4-vinylphenol, propylene glycol, butanoic acid, propanoic acid obtained. Amounts of this solution were applied to filter paper and the solution was evaporated. The amount of the solution applied was varied, in steps of a factor 3. As such low to high activities of microbial species were obtained.

The impregnated filter papers were placed in an agar-agar petri dish. The ATCC^{®} Medium 3: Nutrient agar or nutrient broth was enriched with and used to grow active Bacillus stearothermophilus Donk 1920. ATCC 129890 bacteria (0.2 ml containing 500-1000 CFU) at 51 °C during 24 h in closed plates. Some plates had more than one filter paper, each filter paper then having 3 times more extracted solvent, relative to another one present. and observed over time.

The agar-agar was also provided with a compound, such as the present feed mixture, for testing antimicrobial activity thereof. And at the same tested for the antimicrobial absorbtion. In addition the amount of to be tested compound may be varied and also blanks were tested.

The inhibition zone was then determined, (measured in mm on 4 points) visually. Most compounds tested shows some suppression of bacterial growth, hence antimicrobial activity. Specifically lignite, kaolinite (china clay), and montmorillonite were tested, for instance at a concentration of 1wt% relative to the agar-agar. Normally (for the blank) an inhibition zone of about 5 mm would be expected, which is far greater, because the material it selves acts like an antimicrobial agent preventing any geobaccillus st. to grow.

Fig. 1a-e shows experiments with bacteria on agar-agar plates. In fig. 1a the antimicrobial effect from the impregnated paper on the agar, detrimental to bacterial growth, can be observed around this little piece of antimicrobial paper. The detrimental zone, the effect zone is from the paper to the line, as indicated by arrows. From thereon there is normal bacterial growth. In fig. 1b, using the present kaolinite, far less inhibition of bacteria is observed. The inhibition zone is in fig. 1a on this plate absent, and a little zone is left on the paper with a higher concentration of antimicrobial compounds. Fig. 1a: blank, 2 concentrations. left low, right middle concentration. Fig. 1b: idem but 1.5 % carbon. kaolinite added to the agar. The clear zones (no bacteria) frontiers are indicated by arrows. The clear zones (fig. 1b left side) are gone when applying a low concentration of the present kaolinite.

These antimicrobial tests are meant for a first impression, optionally in combination with other material analytics, like XRF, XRD, laser diffraction analysis, CEC, determination of contaminants, and microscopic analysis like SEM. Thereafter in agricultural practice, the results are found to match the earlier tested good working material. This can be tested by sieving the manure, microbiological testing of the manure, registration of harvested milk and the constituents like % protein, and measuring the amount of feed taken up.

In fig 1c 1 wt.% kaolinite was added, comprising carbon (according to the invention). In fig. 1d kaolinite without carbon was added. In fig. le 0.33 wt.% prior art kaolinite was added.

In summary the tests show that if no bacterial growth is present, beyond the expected inhibition zone based on the blank experiments, the conclusion is that the concentration tested not only limits the anti-microbial activity, but total inhibition occurs. When the inhibition zone is almost equal to or smaller than the blank sample no negative effect occurs, and as the inhibition zone gets smaller, more anti-microbial influence is present.

The figures are further detailed in the description and examples below.

## Claims

1. A feed supplement comprising colloidal particles, comprising 2-50% particles with a size of < 1 µm, the particles comprising
40-85 wt. % alumino-silicate mineral selected from at least one of a tetrahedral-octahedral (TO or 1:1) clay, and a tetrahedral-octahedral-tetrahedral (TOT or 2:1) clay, preferably 50-70 wt.%,
1-30 wt. % organic material, preferably fossil organic material, and
a remainder comprises water, such as crystal water, wherein wt.% are relative to a final weight of the supplement.

2. Feed supplement according to claim 1, wherein the Tetrahedral-Octahedral-clay is selected from kaolin clays, and wherein the tetrahedral-octahedral-tetrahedral clay is selected from the smectite group, the illite group, sepiolite, and attapulgite.

3. Feed supplement according to any of claims 1-2,
wherein the alumino-silicate clay comprising 50-99.9 wt.% (relative to the total fraction of clay) kaolinite (Al₂Si₂O₅(OH)₄) and/or metakaolinite (Al₂Si₂O₇), preferably 60-99 wt.% and more preferably 75-98 wt.% kaolinite and/or metakaolinite.

4. Feed supplement according to any of claims 1-3, comprising 2-20 wt. % organic material, preferably 5-15 wt.%, such as 8-12 wt.%.

5. Feed supplement according to any of claims 1-4, wherein the organic material comprises plant decay products, such as humic acids, fulvic acids, and humin, preferably fossil decay products.

6. Feed supplement according to any of claims 1-5, comprising 2-50% particles, with a size of < 0.5 µm.

7. Feed supplement according to any of claims 1-6, comprising 5-40% particles, preferably 10-20%, with a size of < 0.5 pm, preferably < 0.25 µm, and/or wherein the particles have a BET surface of >200 m²/g (ISO 9277), and/or wherein the alumino-silicate mineral has a cationic exchange capacity of 5-100 meq/100 grams clay at a pH of 7, preferably 8-80 meq/100 grams, more preferably 10-50 meq/100 grams, such as 12-25 meq/100 grams.

8. Feed supplement according to any of claims 1-7, comprising at least one of 0.1-3 wt.% microorganisms, 0.2-3 wt.% zeolite, such as Analcime (NaAl(Si₂O₆) ·(H₂O)), Clinoptilolite (Na,K,Ca)₂-₃Al₃(Al,Si)₂Si₁₃O₃₆·12(H₂O)), Laumontite (CaAl₂Si₄O₁₂·4(H₂O), Chabazite ((Ca_{0,5},Na,K)₄[Al₄Si₈O₂₄] ·12H₂O, Gismondine(Ca₂Al₄Si₄O₁₆·9(H₂O), Mazzite (K₂CaMg₂(Al,Si)₃₆O₇₂·28(H₂O), Heulandite ((Ba,Sr,K,Ca,Na)₂₋₃Al₃(Al,Si)₂Si₁₃O₃₆·12(H₂O), Stilbite (NaCa₄Al₈Si₂₈O₇₂·30(H₂O), Natrolite (Na₂Al₂Si₃O₁₀·2(H₂O), Mordenite ((Ca,Na₂,K₂)Al₂Si₁₀O₂₄·7(H₂O), Gottardiite (Na₃Mg₃Ca₅Al₁₉Si₁₁₇O₂₇₂·93(H₂O), Brewsterite ((Sr,Ba)Al₄Si₁₂O₃₂·10(H₂O), 0.1-3 wt.% TOT clay, such as illite, smectite, montmorillonite, sauconite, nontronite, saponite, vermiculite, bentonite, nacrite, biotite, lepidolite, muscovite, phlogopite, zinnwaldite, clintonite, 0.1-3 wt.% aluminosilicates, such as pyrophyllite, 0.1-3 wt.% talc, 0.1-3 wt.% allophane, 0.1-3 wt.% mica, such as biotite, muscovite, phlogopite, lepidolite, and margarite, 0.01-2 wt.% Ca-salt, 0.01-2 wt.% Mg-salt, 0.01-1 wt.% lignite, 0.01-3 wt.% fossil coal, 0.1-3 wt.% activated coal, and quartz.

9. Feed supplement according to claim 8, wherein microorgansims are selected from *Bacillus cereus, Bacillus subtilis, Lactobacilus acidophilus, Bifidobacterium bifidum, Enterococcus faecium, Ruminobacter amylophilum, Ruminobacter succinogenes, Megasphera elsdeneii, Propionibacterium, geobacillus species, such as G. stearothermophilus, yeast, Lactobacillales,* and combinations thereof.

10. Feed supplement according to any of claims 1-9, wherein the clay is a natural clay, and/or is selected from kaolinite, meta-kaolinite, Dickite (Al₂Si₂O₅(OH)₄, Nacrite (Al₂Si₂O₅(OH)₄), Halloysite (Al₂Si₂O₅(OH)₄), Odinite (Fe³⁺,Mg,Al,Fe²⁺,Ti,Mn)_{2,5}(Si,Al)₂O₅(OH)₄), and combinations thereof.

11. Feed supplement according to any of claims 1-10, wherein the clay, organic material, water, and optional further components in the particles form one fraction and are intimately integrated.

12. Feed supplement according to any of claims 1-11, comprising >50% particles with a size of < 45 µm, preferably >90%, such as > 95%.

13. Feed supplement according to any of claims 1-12 for use as a medicament.

14. Feed supplement according to claim 13, wherein the medicament is for use in improving digestion of dairy animals, such as cows, for improving milk production, for improving health, especially in the gastrointestinal tract, for reducing illness, for reducing irritation, for reducing inflammation, for improving skin quality, such as for red and black pied coloured animals.

15. Feed or food, comprising 0.1-10 wt.% feed supplement according to any of claims 1-14, preferably 0.2-5 wt.%, such as 1-3 wt.%.

16. Feed or food according to claim 15 for bovines, Equidae, such as Equus, and E. africanus, donkeys, comprising 0.3-2.2 wt.% feed supplement, for sheep, goats, pigs, fish, and mustalidae, such as Mustelinae, such as Martes, comprising 0.1-1 wt.% feed supplement, such as 0.2-0.75 wt.%, wherein the wt.% is determined on a dry weight of the feed.

17. Feed or food according to claim 15 or 16, wherein the feed is selected from mixed feed, feed concentrate, crude fibre, provender, a feed ration, a dosage, and combinations thereof.

18. Method of forming a feed supplement according to any of claims 1-17, comprising a step of micronizing >50% particles to a size of < 45 µm, preferably >90%, such as > 95%, and/or
sieving particles over a 1 µm sieve, and removing larger particles, preferably over a 0.5 µm sieve, more preferably a 0.45 µm sieve, and/or separation by means floatation in water and/or air.

## Patentansprüche

1. Nahrungszusatz umfassend kolloidale Partikel, umfassend 2-50% Partikel mit einer Größe von < 1 µm, wobei die Partikel umfassen:
40-85 gew. % Aluminosilikat-Minerale ausgewählt aus mindestens einem tetraedrisch-oktaedrischen (TO oder 1:1) Ton, und einem tetraedrisch-oktaedrisch-tetraedrischen (TOT oder 2:1) Ton, bevorzugt 50-70 gew. %,
1-30 gew. % organisches Material, bevorzugt fossiles organisches Material, und
einen Rest der Wasser umfasst, beispielsweise Kristallwasser, wobei sich gew. % auf das Endgewicht des Zusatzes beziehen.

2. Nahrungszusatz nach Anspruch 1, wobei der tetraedrischoktaedrische Ton aus Kaolin-Tonen ausgewählt ist, und wobei der tetraedrisch-oktaedrisch-tetraedrische Ton aus der Smektitgruppe, der Illitgruppe, Sepiolith und Attapulgit ausgewählt ist.

3. Nahrungszusatz nach einem der Ansprüche 1-2, wobei der Aluminosilicatton 50-99.9 gew. % (relativ zur Gesamtfraktion an Ton) Kaolinit (Al₂Si₂O₅(OH)₄) und/oder Metakaolinit (Al₂Si₂O₇), bevorzugt 60-99 gew. % und besonders bevorzugt 75-98 gew. % Kaolinit und/oder Metakaolinit umfasst.

4. Nahrungszusatz nach einem der Ansprüche 1-3, umfassend 2-20 gew. % organisches Material, bevorzugt 5-15 gew. %, beispielsweise 8-12 gew. %.

5. Nahrungszusatz nach einem der Ansprüche 1-4, wobei das organische Material pflanzliche Zerfallsprodukte, beispielsweise Huminsäure, Fulvinsäure, und Humin, bevorzugt fossile Zerfallsprodukte umfasst.

6. Nahrungszusatz nach einem der Ansprüche 1-5, umfassend 2-50% Partikel mit einer Größe von < 0.5 µm.

7. Nahrungszusatz nach einem der Ansprüche 1-6, umfassend 5-40% Partikel, bevorzugt 10-20%, mit einer Größe von < 0.5 µm, bevorzugt < 0.25 µm, und/oder wobei die Partikel eine BET Oberfläche von > 200 m²/g (ISO 9277) aufweisen, und/oder wobei die Aluminosilikat-Minerale eine Kationenaustauschkapazität von 5-100 meq/100 gram Ton bei einem pH von 7, bevorzugt 8-80 meq/100 gram, besonders bevorzugt 10-50 meq/100 gram, beispielsweise 12-25 meq/100 gram aufweisen.

8. Nahrungszusatz nach einem der Ansprüche 1-7, umfassend mindestens eine von 0.1-3 gew. % Mikroorganismen, 0.2-3 % Zeolith, beispielsweise Analcim (NaAl(Si₂O₆) ·(H₂O)), Klinoptilolith (Na,K,Ca)₂-₃Al₃(Al,Si)₂Si₁₃O₃₆·12(H₂O)), Laumontit (CaAl₂Si₄O₁₂·4(H₂O), Chabasit ((Ca_{0,5},Na,K)₄[Al₄Si₈O₂₄] ·12H₂O, Gismondin (Ca₂Al₄Si₄O₁₆·9(H₂O)), Mazzit (K₂CaMg₂(Al,Si)₃₆O₇₂·28(H₂O), Heulandit ((Ba,Sr,K,Ca,Na)₂₋₃Al₃(Al,Si)₂Si₁₃O₃₆·12(H₂O), Stilbit (NaCa₄Al₈Si₂₈O₇₂·30(H₂O), Natrolith (Na₂Al₂Si₃O₁₀·2(H₂O), Mordenit ((Ca,Na₂,K₂)Al₂Si₁₀O₂₄·7(H₂O), Gottardiit (Na₃Mg₃Ca₅Al₁₉Si₁₁₇O₂₇₂·93(H₂O), Brewsterit ((Sr,Ba)Al₄Si₁₂O₃₂·10(H₂O), 0.1-3 gew. % TOT Ton, beispielsweise Illit, Smektit, Montmorillonit, Sauconit, Nontronit, Saponit, Vermiculit, Bentonit, Nakrit, Biotit, Lepidolith, Muskovit, Phlogopit, Zinnwaldit, Clintonit, 0.1-3 gew. % Aluminosilikate, beispielsweise Pyrophyllit, 0.1-3 gew. % Talk, 0.1-3 gew. % Allophan, 0.1-3 gew. % Mica, beispielsweise Biotit, Muskovit, Phlogopit, Lepidolith, und Margarite, 0.01-2 gew. % Ca-Salz, 0.01-2 gew. % Mg-Salz, 0.01-1 gew. % Lignit, 0.01-3 gew. % fossile Kohle, 0.1-3 gew. % aktivierte Kohle und Quarz.

9. Nahrungszusatz nach Anspruch 8, wobei Mikroorganismen von Bacillus cereus, Bacillus subtilis, Lactobacilus acidophilus, Bifidobacterium bifidum, Enterococcus faecium, Ruminobacter amylophilum, Ruminobacter succinogenes, Megasphera elsdeneii, Propionibacterium, geobacillus species, beispielsweise G. stearothermophilus, Hefe, Lactobacillales, und Kombinationen davon, ausgewählt werden.

10. Nahrungszusatz nach einem der Ansprüche 1-9, wobei der Ton ein natürlicher Ton ist, und/oder von Kaolinit, Metakaolinit, Dickit (Al₂Si₂O₅(OH)₄, Nakrit (Al₂Si₂O₅(OH)₄, Halloysit (Al₂Si₂O₅(OH)₄, Odinit (Fe³⁺,Mg,Al,Fe²⁺,Ti,Mn)_{2,5}(Si,Al)₂O₅(OH)₄), und Kombinationen davon, ausgewählt werden.

11. Nahrungszusatz nach einem der Ansprüche 1-10, wobei der Ton, das organische Material, das Wasser und optional weitere Komponenten in den Partikeln eine Fraktion bilden und eng integriert sind.

12. Nahrungszusatz nach einem der Ansprüche 1-11, umfassend >50% Partikel mit einer Größe von < 45 µm, bevorzugt > 90%, beispielsweise > 95%.

13. Nahrungszusatz nach einem der Ansprüche 1-12, zur Verwendung als Medikament.

14. Nahrungszusatz nach Anspruch 13, wobei das Medikament zur Verwendung in der Verbesserung der Verdauung von Milchtieren, beispielsweise Kühen, Verbesserung der Milchproduktion, Verbesserung der Gesundheit, insbesondere im Magen-Darm-Trakt, Reduzierung von Krankheit, Reduzierung von Irritation, Reduzierung von Entzündung, Verbesserung von der Hautqualität, beispielsweise bei rot und schwarz farbig gescheckten Tieren, ist.

15. Nahrung oder Futter, umfassend 0.1-10 gew. % Nahrungszusatz nach einem der Ansprüche 1-14, bevorzugt 0.2-5%, beispielsweise 1-3 gew. %.

16. Nahrung oder Futter nach Anspruch 15 für Rinder, Einhufer, beispielsweise Pferde, und E. africanus, Esel, umfassend 0.3-2.2 gew. % Nahrungszusatz, für Schafe, Ziegen, Schweine, Fische, und Mustalidae, beispielsweise Mustelinae, beispielsweise Martes, umfassend 0.1-1 gew. % Nahrungsmittel, beispielsweise 0.2-0.75 gew. %, wobei die gew. % anhand des Trockengewichts der Nahrung bestimmt wird.

17. Nahrung oder Futter nach Anspruch 15 oder 16, wobei die Nahrung aus gemischter Nahrung, Nahrungskonzentrat, Rohfaser, Tierfutter, einer Nahrungsration, einer Dosierung und Kombinationen davon, ausgewählt wird.

18. Methode zum Formen eines Nahrungszusatzes nach einem der Ansprüche 1-17, umfassend dem Schritt Mikronisieren > 50% Partikel zu einer Größe von < 45 µm, bevorzugt >90%, beispielsweise >95%,
und/oder
Sieben der Partikel über ein 1 µm Sieb, und Entfernen größerer Partikel, bevorzugt über ein 0,5 µm Sieb, besonders bevorzugt ein 0.45 µm Sieb, und/oder Abtrennen durch Flotation in Wasser und/oder Luft.

## Revendications

1. Complément alimentaire comprenant des particules colloïdales, comprenant 2 à 50 % de particules ayant une taille < 1 µm, les particules comprenant
40 à 85 % en poids de minéral aluminosilicate qui est au moins l'un choisi parmi une argile tétraédrique-octaédrique (TO ou 1/1), et une argile tétraédrique-octaédrique-tétraédrique (TOT ou 2/1), de préférence 50 à 70 %,
1 à 30 % en poids de matériau organique, de préférence de matériau organique fossile, et
pour le reste, de l'eau, telle que de l'eau cristalline,
dans lequel les pourcentages en poids sont relatifs au poids final du complément.

2. Complément alimentaire selon la revendication 1, dans lequel l'argile tétraédrique-octaédrique est choisie parmi les argiles de type kaolin, et dans lequel l'argile tétraédrique-octaédrique-tétraédrique est choisie parmi le groupe de la smectite, le groupe de l'illite, la sépiolite, et l'attapulgite.

3. Complément alimentaire selon l'une quelconque des revendications 1 et 2, dans lequel l'argile aluminosilicate comprend 50 à 99,9 % en poids (par rapport à la fraction totale d'argile) de kaolinite (Al₂Si₂O₅(OH)₄) et/ou de métakaolinite (Al₂Si₂O₇), de préférence 60 à 99 % en poids et plus préférablement 75 à 98 % en poids de kaolinite et/ou de métakaolinite.

4. Complément alimentaire selon l'une quelconque des revendications 1 à 3, comprenant 2 à 20 % en poids de matériau organique, de préférence 5 à 15 % en poids, tels que 8 à 12 % en poids.

5. Complément alimentaire selon l'une quelconque des revendications 1 à 4, dans lequel le matériau organique comprend des produits de décomposition des plantes, tels que des acides humiques, des acides fulviques, et l'humine, de préférence des produits de décomposition fossiles.

6. Complément alimentaire selon l'une quelconque des revendications 1 à 5, comprenant 2 à 50 % de particules ayant une taille < 0,5 µm.

7. Complément alimentaire selon l'une quelconque des revendications 1 à 6, comprenant 5 à 40 %, de préférence 10 à 20 %, de particules ayant une taille < 0,5 µm, de préférence < 0,25 µm, et/ou dans lequel les particules ont une surface spécifique BET > 200 m²/g (ISO 9277), et/ou dans lequel le minéral aluminosilicate a une capacité d'échange de cations de 5 à 100 méq/100 grammes d'argile à un pH de 7, de préférence de 8 à 80 méq/100 grammes, plus préférablement de 10 à 50 méq/100 grammes, tels que 12 à 25 meq/100 grammes.

8. Complément alimentaire selon l'une quelconque des revendications 1 à 7, comprenant au moins 0, 1 à 3 % en poids de microorganismes, 0,2 à 3 % en poids de zéolite, telle que l'analcime (NaAl(Si₂O₆)•(H₂O)), la clinoptilolite ((Na,K,Ca)₂₋₃Al₃(Al,Si)₂Si₁₃O₃₆•12(H₂O)), la laumontite (CaAl₂Si₄O₁₂•4(H₂O)), la chabazite ((Ca_{0,5},Na,K)₄[Al₄Si₈O₂₄]•12H₂O)), la gismondine (Ca₂Al₄Si₄O₁₆•9H₂O), la mazzite (K₂CaMg₂(Al,Si)₃₆O₇₂•28(H₂O)), la heulandite ((Ba,Sr,K,Ca,Na)₂₋₃Al₃(Al,Si)₂Si₁₃O₃₆•12(H₂O)), la stilbite (NaCa₄Al₈Si₂₈O₇₂•30(H₂O)), la natrolite (Na₂Al₂Si₃O₁₀•2(H₂O)), la mordénite ((Ca,Na₂,K₂)Al₂Si₁₀O₂₄•7(H₂O)), la gottardiite (Na₃Mg₃Ca₅Al₁₉Si₁₁₇O₂₇₂•93(H₂O)), la brewstérite ((Sr,Ba)Al₄Si₁₂O₃₂•10(H₂O)), 0,1 à 3 % en poids d'argile TOT, telle que l'illite, la smectite, la montmorillonite, la sauconite, la nontronite, la saponite, la vermiculite, la bentonite, la nacrite, la biotite, la lépidolite, la muscovite, la phlogopite, la zinnwaldite, la clintonite, 0,1 à 3 % en poids d'aluminosilicates, tels que la pyrophyllite, 0,1 à 3 % en poids de talc, 0,1 à 3 % en poids d'allophane, 0,1 à 3 % en poids de mica, tel que la biotite, la muscovite, la phlogopite, la lépidolite, et la margarite, 0,01 à 2 % en poids de sel de Ca, 0,01 à 2 % en poids de sel de Mg, 0,01 à 1 % en poids de lignite, 0,01 à 3 % en poids de charbon fossile, 0,1 à 3 % en poids de charbon activé, et du quartz.

9. Complément alimentaire selon la revendication 8, dans lequel les microorganismes sont choisis parmi *Bacillus cereus, Bacillus subtilis, Lactobacillus acidophilus, Bifidobacterium bifidum, Enterococcus faecium, Ruminobacter amylophilum, Ruminobacter succinogenes, Megasphera elsdeneii, Propionibacterium,* l'espèce *Geobacillus,* tel que *G. stearothermophilus,* une levure, un lactobacille, et leurs combinaisons.

10. Complément alimentaire selon l'une quelconque des revendications 1 à 9, dans lequel l'argile est une argile naturelle, et/ou est choisie parmi la kaolinite, la métakaolinite, la dickite (AlSi₂O₅(OH)₄), la nacrite (Al₂Si₂O₅(OH)₄), la halloysite (Al₂Si₂O₅(OH)₄), l'odinite ((Fe³⁺,Mg,Al,Fe²⁺,Ti,Mn)_{2,5}(Si,Al)₂O₅(OH)₄), et leurs combinaisons.

11. Complément alimentaire selon l'une quelconque des revendications 1 à 10, dans lequel l'argile, le matériau organique, l'eau, et d'autres composants optionnels dans les particules forment une seule fraction et sont intimement intégrés.

12. Complément alimentaire selon l'une quelconque des revendications 1 à 11, comprenant > 50 % de particules ayant une taille < 45 µm, de préférence > 90 %, tels que > 95 %,.

13. Complément alimentaire selon l'une quelconque des revendications 1 à 12, pour une utilisation en tant que médicament.

14. Complément alimentaire selon la revendication 13, où le médicament est pour une utilisation dans l'amélioration de la digestion des animaux producteurs de lait, tels que les vaches, pour améliorer la production de lait, pour améliorer la santé, en particulier dans les voies gastro-intestinales, pour réduire la morbidité, pour réduire les irritations, pour réduire les inflammations, pour améliorer la qualité de la peau, comme pour les animaux de couleur pie noir et rouge.

15. Aliment pour humains ou animaux, comprenant 0,1 à 10 % en poids de complément alimentaire selon l'une quelconque des revendications 1 à 14, de préférence 0,2 à 5 % en poids, tels que 1 à 3 % en poids,.

16. Aliment pour humains ou animaux selon la revendication 15, destiné à des bovidés, des équidés, tels qu'Equus, et E. africanus, des ânes, comprenant 0,3 à 2,2 % en poids de complément alimentaire, destiné à des moutons, des chèvres, des cochons, des poissons, et des mustélidés, tels que Mustelinae, tels que Martes, comprenant 0,1 à 1 % en poids de complément alimentaire, tels que 0,2 à 0,75 % en poids, dans lequel les pourcentages en poids sont déterminés sur le poids sec de l'aliment.

17. Aliment pour humains ou animaux selon la revendication 15 ou 16, où l'aliment est choisi parmi un aliment mixte, un aliment concentré, des fibres brutes, un fourrage, une ration alimentaire, une dose, et leurs combinaisons.

18. Procédé de formation d'un complément alimentaire selon l'une quelconque des revendications 1 à 17, comprenant une étape de micronisation de > 50 % de particules à une taille < 45 µm, de préférence > 90 %, tels que > 95 %, et/ou
le tamisage des particules sur un tamis de 1 µm, et l'élimination des particules plus grosses, de préférence sur un tamis de 0,5 µm, plus préférablement un tamis de 0,45 µm, et/ou par séparation au moyen d'une flottation dans de l'eau et/ou de l'air.
